# EUROPEAN PATENT SPECIFICATION

(11) **EP 1 682 612 B1**
(45) Date of publication and mention of the grant of the patent: **02.01.2013**
(21) Application number: 04818580.5
(22) Date of filing: 15.11.2004
(51) Int. Cl.: C08K 3/26, C08J 3/00, C08L 27/06, C08F 14/06

(54) **PVC-PCC NANOCOMPOSITES RESIN COMPOSITION WITH SUPERIOR IMPACT STRENGTHS AND METHOD FOR PREPARING THE SAME**
PVC-PCC-NANOKOMPOSIT-HARZZUSAMMENSETZUNG MIT ÜBERLEGENER SCHLAGZÄHIGKEIT UND HERSTELLUNGSVERFAHREN DAFÜR
COMPOSITION DE RESINE DE NANOCOMPOSITES PVC-PCC PRESENTANT UNE RESISTANCE SUPERIEURE AUX CHOCS ET PROCEDE DE PREPARATION DE CELLE-CI

(30) Priority: 14.11.2003 KR 2003080415
(43) Date of publication of application: 26.07.2006
(73) Proprietor: LG Chem Ltd., Seoul 150-721 (KR)
(72) Inventor: JEON, Hee-Joo, Daejeon 305-728 (KR); PARK, Kwang-Min, Daegu 702-795 (KR); SHIN, Se-Hyun, Daejeon 305-340 (KR); KIM, Sung-Woo, Daegu 305-340 (KR)
(74) Representative: Goddar, Heinz J.
(86) International application number: PCT/KR2004/002952
(87) International publication number: WO 2005/047382

(56) References cited:
- EP-A1- 1 209 196
- WO-A1-03/004414
- WO-A1-2004/003093
- FR-A1- 2 231 695
- JP-A- 2000 063 579
- KR-A- 2004 105 291
- US-A- 4 035 563
- US-A- 5 214 092
- US-B2- 6 765 049

## Description

### Technical Field

The present invention relates to a nanocomposite resin composition and a method for preparing the same. More particularly, the present invention relates to a PVC based nanocomposite resin composition with superior impact strength, which is prepared by uniformly dispersing nano calcium carbonate in a vinyl chloride monomer, dispersing the mixture system in water to obtain an suspension system and polymerizing it at an elevated temperature, and a method for preparing the same.

### Background Art

In general, PVC resins are utilized in the soft and the rigid applications. Soft applications include wallpaper, floorings, artificial leather, toys, disposable polygloves, where PVC resins are used in the form of paste in combination with a lot of plasticizer. Paste PVC resins are manufactured by emulsion polymerization or MSP (microsuspension seeded Polymerization). The rigid applications including pipes, window frames and hard sheets adopt extrusion, calendaring or injection process. PVC resins for rigid applications are mostly manufactured by suspension polymerization. In the processing of PVC, additives are typically used altogether to enhance properties and to secure the stability of the resins while processing; impact modifier, heat stabilizer, processing aid, pigment, and inorganic filler to name a few. For example, PVC window profile compound includes 6-10 parts by weight of an impact modifier such as methyl methacrylate-butadiene-styrene (MBS) copolymer, acrylic impact modifier, chlorinated polyethylene (CPE), per 100 parts by weight of a PVC resin to enhance the impact strength of the final article. However, these impact modifiers are expensive compared to PVC resin.

PCC (precipitated calcium carbonate) having a particle size of about 0.07 micron (70 nm) was reported to have an impact modification effect (J.A. Radosta. "Low Temperature and Ambient Impact Modification of Polymers with Surface Treated Calcium Carbonate" SPE ANTEC, New Orleans, May 7-10, 1979). According to this report, a superior impact modification effect is obtained for an extrusion article of a mixture of at least 10 parts by weight of PCC and 100 parts by weight of a PVC resin. In this case, the extrusion article was prepared by several cycles of processing including mixing, roll-mill press, crushing and extrusion of the PCC/PVC mixture to ensure the fine dispersion of the PCC in the polymer matrix. Nano PCC, which is finely dispersed in a polymer medium, is suggested to disperse impact energy into the polymer medium due to its large specific surface area. For nano PCC to have an impact modification effect, the primary PCC particle should have a size of 100 nm or less to maximize the surface area, and the nano particles should be dispersed in the polymer medium as close as the primary particle. Nano dispersion of PCC in polymer matrix is difficult to achiev with the general extrusion processing. The multi-step processing proposed in the report, which is difficult to apply to industrial productions, adopts external physical force to finely disperse the PCC in the polymer medium.

### Disclosure of Invention

The present invention provides a nano calcium carbonate/vinyl chloride monomer dispersion comprising a vinyl chloride monomer, nano calcium carbonate and a lipophilic dispersing agent.

The nano calcium carbonate/vinyl chloride monomer dispersion may further comprise a polymerization initiator.

The polymerization initiator may be at least one polymerization initiator selected from the group consisting of diacyl peroxide, peroxy ester, peroxy dicarbonate.

The nano calcium carbonate may be comprised in 1-30 parts by weight, the lipophilic dispersing agent may be comprised in 0.01-10 parts by weight and the polymerization initiator may be comprised in 0.01-5 parts by weight per 100 parts by weight of the vinyl chloride monomer.

The lipophilic dispersing agent may be a monomer or polymer having a molecular weight of 40-100,000 containing a phosphoric acid, a carboxylic acid or a salt thereof.

The salts of the phosphoric acid or the carboxylic acid may have an organic side chain selected from the group consisting of sodium, ammonium, primary, secondary, tertiary or quaternary alkyl ammonium, C₁-C₃₀ hydrocarbon, a homopolymer selected from the group consisting of polyolefin, polyether, polymethacrylate, polyacrylate, polyester and polyurethane, and copolymers thereof.

The lipophilic polymer type dispersing agent may have a homopolymer chain selected form the group consisting of polyolefin, polyether, polymethacrylate, polyacrylate, polyacetate, polyester and polyurethane or copolymers thereof as a main chain.

The present invention also provides a PVC based nanocomposite resin composition prepared using the nano calcium carbonate/vinyl chloride monomer dispersion.

The nano calcium carbonate may have a particle size of at most 500 nm.

The surface of the nano calcium carbonate may be modified with a metal salt of an organic carboxylic acid.

The nano calcium carbonate/vinyl chloride monomer dispersion is the same as described above.

The present invention also provides a method for preparing a PVC based nanocomposite resin composition comprising the steps of (a) adding nano calcium carbonate and a lipophilic dispersing agent to a vinyl chloride monomer to disperse them; (b) adding the resultant mixture system to an aqueous solution system comprising deionized water, a suspension stabilizer and a polymerization initiator to prepare a suspension system and performing polymerization at an elevated temperature to prepare a PVC based nanocomposite resin composition; (c) processing the PVC based nanocomposite resin including an impact modifier to produce extruded articles with a superior impact strength.

The polymerization at an elevated temperature may be performed at 50-65 °C.

In preparing the PVC based nanocomposite resin composition, the polymerization temperature may be determined so that the degree of polymerization becomes 700-1300. The polymerization initiator may be added in the step (a), instead of the step (b).

The nano calcium carbonate and the lipophilic dispersing agent of the step (a) may be used in 1-30 parts by weight and 0.01-10 parts by weight, respectively, per 100 parts by weight of the vinyl chloride monomer. The deionized water, the suspension stabilizer and the polymerization initiator of the step (b) may be used in 100-300 parts by weight, 0.01-5 parts by weight and 0.01-5 parts by weight, respectively, per 100 parts by weight of the vinyl chloride monomer. The impact modifier of the step (c) may be at least one selected from the group consisting of a methyl methacrylate-butadiene-styrene copolymer, an acrylic impact modifier and a chlorinated polyethylene and may be used in 1-10 parts by weight per 100 parts by weight of the PVC based nanocomposite resin composition.

The nano calcium carbonate may have a particle size of at most 500 nm.

The lipophilic dispersing agent may be a monomer or polymer compound having a molecular weight of 40-100,000 containing a phosphoric acid, a carboxylic acid or a salt thereof.

The salts of the phosphoric acid or the carboxylic acid may have an organic side chain selected from the group consisting of sodium, ammonium, primary, secondary, tertiary or quaternary alkyl ammonium, C₁-C₃₀ hydrocarbon, a homopolymer selected from the group consisting of polyolefin, polyether, polymethacrylate, polyacrylate, polyester and polyurethane, and copolymers thereof.

The lipophilic polymer type dispersing agent may have a homopolymer selected form the group consisting of polyolefin, polyether, polymethacrylate, polyacrylate, polyacetate, polyester and polyurethane or copolymers thereof as a main chain.

The suspension stabilizer may be at least one selected from the group consisting of vinyl acetate, cellulose and gelatin.

For the suspension stabilizer, a primary suspension stabilizer comprising at least one of a polyvinyl acetate having a degree of polymerization of 500-3,000, which has been hydrolyzed to 70-98 mol%, and a modified cellulose having a degree of substitution of 1.0-3.0 and a degree of polymerization of 50-2,000; a secondary suspension stabilizer comprising a polyvinyl acetate having a degree of polymerization of 500-3000, which has been hydrolyzed to 10-60 mol%, may be used.

Hereunder is given a more detailed description of the present invention.

The method for preparing a PVC based nanocomposite according to the present invention comprises the steps of dispersing nano calcium carbonate in a vinyl chloride monomer, adding the resultant mixture system to an aqueous solution system comprising water, a suspension stabilizer and a polymerization initiator to prepare a suspension, polymerizing the vinyl chloride monomer at an elevated temperature to prepare a PVC/nano calcium carbonate composite resin and processing the resultant composite resin.

In another embodiment of the present invention, the polymerization initiator may be added in the step of preparing the nano calcium carbonate/vinyl chloride monomer mixture system.

### 1. Dispersion of nano calcium carbonate

The step of adding nano calcium carbonate and a lipophilic dispersing agent to a vinyl chloride monomer to disperse them is described in detail.

In the present invention, a precipitated calcium carbonate (PCC) having a particle size smaller than 1 µm, preferably 40-70 nm, is used. Preferably, the nano calcium carbonate is used in 1-30 parts by weight per 100 parts by weight of the vinyl chloride monomer, considering the polymerization stability of the suspension system, the extrusion processing condition and the physical properties of the final product.

Because the surface of the nano calcium carbonate is hydrophilic, it should be treated with a metal salt of an organic carboxylic acid such as fatty acid, resin acid. In the present invention, the surface of the nano calcium carbonate is modified with fatty acid to wet the vinyl chloride monomer. However, an additional dispersing agent is required to obtain an ultrafine (sub-micron size) dispersion of PCC in vinyl chloride.

The lipophilic dispersing agent is a monomer dispersing agent or a polymer dispersing agent having carboxylic acid, phosphoric acid or a salt thereof, so that it is soluble in an organic phase and compatible with the surface of the nano calcium carbonate. More preferably, it has a chemical structure compatible with a PVC resin.

The salt of phosphoric acid or carboxylic acid has sodium, ammonium, a primary, secondary, tertiary or quaternary alkyl ammonium salt, C₁-C₃₀ hydrocarbon, a homopolymer selected from the group consisting of polyolefin, polyether, polymethacrylate, polyacrylate, polyacetate, polyester and polyurethane or a copolymer thereof as side chain.

Typically, the main chain of the lipophilic dispersing agent may be an oligomer or a polymer such as polyether like poly(ethylene oxide) and poly(propylene oxide); polyacrylate like poly(methyl methacrylate), poly(n-hexyl methacrylate), poly(n-propyl acrylate) and (poly(n-butyl acrylate); polylactone like poly(ε-caprolactone), poly(β-propiolactone), poly(valerolactone), polyester. Also, a polymer with a strong polarity so as to be compatible with a PVC resin or polymers with PVC-friendly functional groups, such as polyurethane and poly(vinyl acetate), may be used as the main chain of the lipophilic dispersing agent. The lipophilic dispersing agent may adopt a homopolymer, a copolymer of the above polymer components or a copolymer comprising other polymer components.

A typical structure of the dispersing agent is illustrated in Formulas 1 and 2 below: 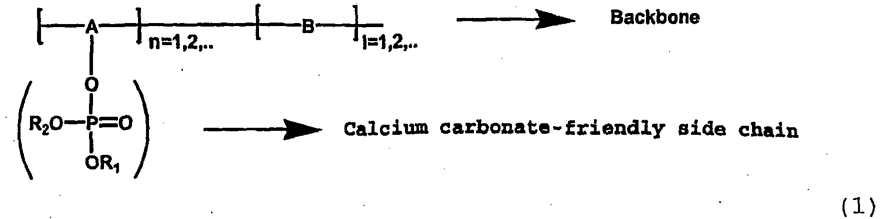 where each of A and B of the backbone of the polymer is a homopolymer or a copolymer selected from the group consisting of polyether, polyolefin, polymethacrylate, polyacrylate, polyacetate, polyester and polyurethane; each of R₁ and R₂ in the calcium carbonate-friendly side chain is hydrogen, C₁-C₃₀ hydrocarbon or a homopolymer or a copolymer selected from the group consisting of polyether, polymethacrylate, polyacrylate, polyacetate, polyester and polyurethane; n and l are integers. 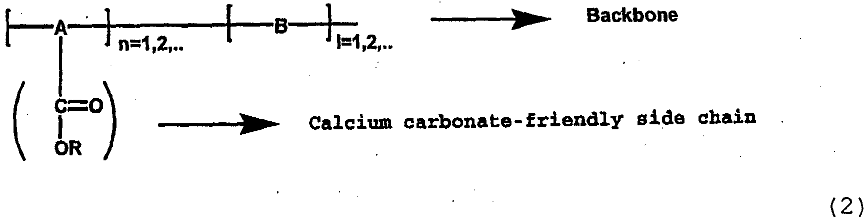 where each of A and B of the backbone of the polymer is a homopolymer or a copolymer selected from the group consisting of polyether, polyolefin, polymethacrylate, polyacrylate, polyacetate, polyester and polyurethane; R of the calcium carbonate-friendly side chain is hydrogen, sodium, ammonium, primary, secondary, tertiary or quaternary alkyl ammonium, C₁-C₃₀ hydrocarbon or a homopolymer or a copolymer selected from the group consisting of polyether, polymethacrylate, polyacrylate, polyacetate, polyester and polyurethane; and n and 1 are integers.

The dispersing agent has molecular weight ranging from 40 to 100,000, preferably ranging from 200 to 100,000. Also preferably, l and n are integers equal to or larger than 1. For example, if A is a homopolymer of polyethylene oxide having a molecular weight of 300 and a phosphoric acid unit is present in the terminal of the molecule, then each of m and n is 1. Also, if an acid unit is present in the side chain of the polymer, the proportion of each copolymer unit may be expressed by m and n. Here, m represents the proportion of the phosphoric acid or carboxylic acid and n represents the proportion of the polymer unit.

Typical examples of adsorption groups that enable effective dispersion in an organic phase by electronic and steric interaction with the surface of the nano calcium carbonate are carboxylic acid and phosphoric acid. Organic salts of these acids can also be utilized. Besides, any acid having affinity to the surface of the nano calcium carbonate, which is coordinated by a cation, may be the adsorption group of the lipophilic dispersing agent.

Preferably, the lipophilic dispersing agent is used in 0.01-10 parts by weight per 100 parts by weight of the nano calcium carbonate. If the content of the lipophilic dispersing agent is below 0.01 parts by weight, the calcium carbonate may be precipitated on the vinyl chloride monomer. Otherwise, if it exceeds 10 parts by weight, the dispersing agent may remain on the surface of the final product to cause foaming, decrease of heat stability, discoloring.

### 2. Polymerization of nano calcium carbonate/vinyl chloride composite resin

The step of dispersing the vinyl chloride monomer mixture system, in which the nano calcium carbonate has been dispersed, in water to prepare a suspension and polymerizing it to prepare a PVC/nano calcium carbonate composite is described in detail.

If deionized water containing a suspension stabilizer and a polymerization initiator is mixed with the nano calcium carbonate/vinyl chloride monomer dispersion system and stirred, a liquid drop of vinyl chloride having a size of 10-50 µm is formed in water. The deionized water is used in 100-300 parts by weight, preferably in 150 parts by weight, per 100 parts by weight of the vinyl chloride monomer. The suspension stabilizer may be vinyl acetate, cellulose, gelatin. A polyvinyl acetate having a degree of polymerization of 500-3,000, which has been hydrolyzed to 70-98 mol%, and a modified cellulose having a degree of substitution of 1.0-3.0 and a degree of polymerization 50-2,000 are used as the primary suspension stabilizer. For the secondary suspension stabilizer, a polyvinyl acetate which has been hydrolyzed to 10-60 mol% may be used. In addition, a pH controller, an antioxidant, a scaling inhibitor, may be added in the polymerization step to improve whiteness, weather resistance, of the resin.

### 3. Preparation of PVC based nanocomposite resin

4-6 parts by weight of a composite stabilizer comprising a heat stabilizer and a lubricant and 1-10 parts by weight of a methyl methacrylate-butadiene-styrene (MBS) copolymer, an acrylic impact modifier (AIM) or a chlorinated polyethylene (CPE) are added to 100 parts by weight of the nano calcium carbonate/vinyl chloride composite resin composition. The mixture is mixed at 90-120 °C for 5-30 minutes and a PVC based nanocomposite resin composition is prepared using a HAAKE extruder. A planar sample having a thickness of 3 mm is prepared using the resultant composition. The conditions of mixing and extrusion may be different depending on the equipments.

The PVC based nanocomposite resin composition may be further processed by adding a heat stabilizer, a lubricant, a processing aid, an antioxidant, if required.

### Brief Description of Drawings

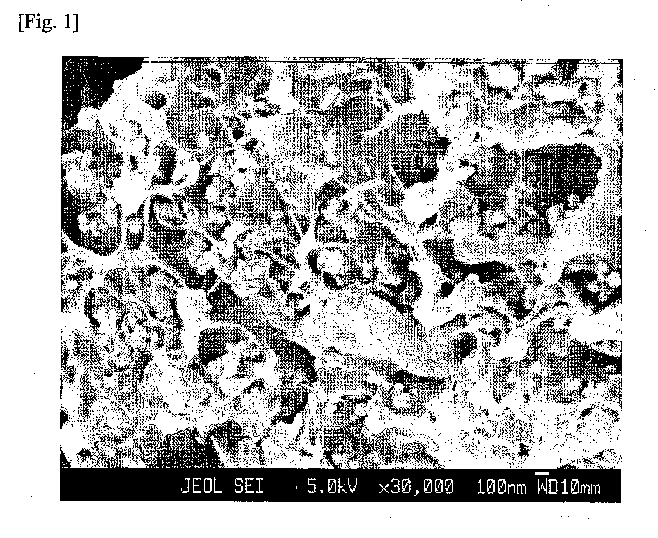

FIG. 1 is the scanning electron micrograph (SEM) of the cross-section of the PVC based nanocomposite resin composition prepared according to the present invention.

### Modes for Carrying Out the Invention

Hereinafter, the present invention is described more specifically through examples. But the present invention is not limited to or by them.

### [Example 1]

A PVC/nano calcium carbonate composite was prepared as follows.

### (1) Dispersion of nano calcium carbonate on vinyl chloride monomer

9 parts by weight of nano calcium carbonate and 0.45 parts by weight of a lipophilic dispersing agent (BYK102^{®}, BYK Chemie) were added to a 1,000-L, high-pressure stirring tank. The tank was evacuated. 100 parts by weight (300 kg) of a vinyl chloride monomer was added to the tank and stirring was performed for 90 minutes to obtain a stable dispersion.

### (2) Polymerization of PVC/nano calcium carbonate composite

0.055 part by weight of a primary and a secondary suspension stabilizers comprising 150 parts by weight of deionized water, PVA and cellulose and each 0.03 part by weight of t-butyl peroxyneodecanate and di-2-ethylhyxyl peroxydicarbonate were added to a reactor. The mixture system of (1) was transferred and polymerization was performed at 58°C after stirring for 90 minutes. When the pressure difference of the reactor reached 1 kgf/cm², the reactor was cooled down and the remaining vinyl chloride monomer was removed. The resultant product was dried to obtain a PVC/nano calcium carbonate composite resin.

### (3) Processing of PVC/nano calcium carbonate composite

6 parts by weight of a composite stabilizer comprising a heat stabilizer and a lubricant, and 3 parts by weight of methyl methacrylate-butadiene-styrene (MBS), an impact modifier, were added to 100 parts by weight (5 kg) of the composite resin. After mixing at 105°C for 20 minutes, a planar extrusion sample having a thickness of 3 mm was prepared using a HAAKE twin extruder. Processing was performed for less than 3 minutes along the die direction at a screw rotation rate of 30 rpm, while increasing the temperature to about 165, 170, 175 and 185°C. The resultant extrusion product was let to cool down. A Charpy impact strength sample and an Izod impact strength sample were prepared form the extrusion sample, according to Korean Industrial Standards (KS) B 5522 and KS M 3055, respectively. The impact strength measurement result is given in Table 1 below.

### [Example 2]

A resin composition was prepared in the same manner of Example 1, except that 0.03 parts by weight of a polymerization initiator was further added to the stirring tank in the step (1) and that addition of the polymerization initiator was omitted in the step (2). The impact strength measurement result for the extrusion sample is given in Table 1.

### [Example 3]

A resin composition was prepared in the same manner of Example 1, except that 4 parts by weight of a chlorinated polyethylene (CPE) was added to the PVC/nano calcium carbonate composite resin as impact modifier. The impact strength measurement result for the extrusion sample is given in Table 1.

### [Example 4]

A resin composition was prepared in the same manner of Example 2, except that 4 parts by weight of a chlorinated polyethylene (CPE) was added to the PVC/nano calcium carbonate composite resin as impact modifier. The impact strength measurement result for the extrusion sample is given in Table 1.

### [Comparative Example 1]

A resin composition was prepared in the same manner of Example 2, except that 6.5 parts by weight of an MBS impact modifier was added to 100 parts by weight (5 kg) of a polyvinyl resin not comprising nano calcium carbonate (LS100^{®}, LG Chem). The impact strength measurement result for the extrusion sample is given in Table 1.

### [Comparative Example 2]

A resin composition was prepared in the same manner of Example 2, except that 9 parts by weight of a CPE impact modifier was added to 100 parts by weight (5 kg) of a polyvinyl resin not comprising nano calcium carbonate (LS100^{®}, LG Chem). The impact strength measurement result for the extrusion sample is given in Table 1.

**[Table 1]**

| Classification | Example 1 | Example 2 | Example 3 | Example 4 | Comparative Example 1 | Comparative Example 2 |
|---|---|---|---|---|---|---|
| Charpy impact strength (kg•cm/cm) | 88 | 89 | 48 | 48 | 30 | 28 |
| Izod impact strength (kg•cm/cm) | 114 | 113 | 106 | 104 | 15 | 14 |

As seen in Table 1, the nano calcium carbonate/vinyl chloride composite prepared by adding nano calcium carbonate shows significantly superior impact strength compared with the conventional vinyl chloride resin, even when the amount of the impact modifier is reduced to less than half. The Charpy impact strength was improved by almost three times when the content of MBS was reduced from 6.5 parts by weight (Comparative Example 1) to 3 parts by weight (Examples 1-2). It was also improved by 170 % when the content of CPE was reduced from 9 parts by weight (Comparative Example 2) to 4 parts by weight (Examples 3-4). The Izod impact strength was also improved by at least 7 times when the amount of the impact modifier was reduced to less than half. Thus, the PVC/nano calcium carbonate composite of the present invention has significantly improved impact modification effect compared with the conventional vinyl chloride resin even with a small amount of impact modifier.

FIG. 1 is the scanning electron micrograph (SEM) of the cross-section of the PVC/nano calcium carbonate composite prepared in Example 1. As seen in FIG. 1, the nano calcium carbonate particles are uniformly distributed.

### Industrial Applicability

As apparent from the above description, the PVC based nanocomposite resin composition and the method for preparing the same according to the present invention significantly improve the impact strength of a PVC resin by uniformly dispersing nano calcium carbonate in the PVC resin particles. According to the present invention, it is possible to reduce the amount of expensive impact modifier to about 1/5. Thus, the present invention is significantly effective in reducing production cost of a PVC resin requiring superior impact strength.

## Claims

1. A nano calcium carbonate/vinyl chloride monomer dispersion comprising a vinyl chloride monomer, nano calcium carbonate and a lipophilic dispersing agent.

2. The nano calcium carbonate/vinyl chloride monomer dispersion of claim 1, which further comprises a polymerization initiator.

3. The nano calcium carbonate/vinyl chloride monomer dispersion of claim 1, which comprises 1-30 parts by weight of nano calcium carbonate and 0.01-10 parts by weight of a lipophilic dispersing agent per 100 parts by weight of the vinyl chloride monomer.

4. The nano calcium carbonate/vinyl chloride monomer dispersion of claim 2, which comprises 1-30 parts by weight of nano calcium carbonate, 0.01-10 parts by weight of a lipophilic dispersing agent and 0.01-5 parts by weight of a polymerization initiator per 100 parts by weight of the vinyl chloride monomer.

5. The nano calcium carbonate/vinyl chloride monomer dispersion of claim 1 or 2, wherein the lipophilic dispersing agent is a monomer or polymer compound having a molecular weight of 40-100,000, which includes a phosphoric acid, a carboxylic acid or a salt thereof.

6. The nano calcium carbonate/vinyl chloride monomer dispersion of claim 5, wherein the salts of the phosphoric acid or the carboxylic acid have an organic side chain selected from the group consisting of sodium, ammonium, primary, secondary, tertiary or quaternary alkyl ammonium salt, C₁-C₃₀ hydrocarbons, a homopolymer selected from the group consisting of polyolefin, polyether, polymethacrylate, polyacetate, polyacrylate, polyester and polyurethane, and a copolymer thereof.

7. The nano calcium carbonate/vinyl chloride monomer dispersion of claim 5, wherein the lipophilic polymer has a homopolymer selected from the group consisting of polyolefin, polyether, polymethacrylate, polyacrylate, polyacetate, polyester and polyurethane or a copolymer thereof as a main chain.

8. A PVC based nanocomposite resin composition prepared using the nano calcium carbonate/vinyl chloride monomer dispersion of any one of claims 1-7.

9. A method for preparing a PVC based nanocomposite resin composition comprising the steps of:
(a) adding nano calcium carbonate and a lipophilic dispersing agent to a vinyl chloride monomer to disperse them;
(b) adding the resultant mixture system to an aqueous solution system comprising deionized water, a suspension stabilizer and a polymerization initiator to prepare a suspension system and polymerizing the suspension system at an elevated temperature to prepare a PVC based nanocomposite resin composition; and
(c) processing the PVC based nanocomposite resin composition including an impact modifier to produce extruded articles.

10. The method of claim 9, wherein the impact modifier' is at least one selected from the group consisting of a methyl methacrylate-butadiene-styrene copolymer, an acrylic impact modifier and chlorinated polyethylene.

11. The method of claim 9, wherein each of the nano calcium carbonate and the lipophilic dispersing agent in the step (a) is comprised in 1-30 parts by weight and 0.01-10 parts by weight, respectively, per 100 parts by weight of the vinyl chloride monomer and each of the suspension stabilizer and the polymerization initiator of the step (b) is comprised in 0.01-5 parts by weight and 0.01-5 parts by weight, respectively, per 100 parts by weight of the vinyl chloride monomer and the impact modifier of the step (c) is comprised in 1-10 parts by weight per 100 parts by weight of the PVC based nanocomposite resin composition.

12. The method of claim 9, wherein the nano calcium carbonate has a particle size of at most 500 nm.

13. The method of claim 9, wherein the lipophilic dispersing agent is a monomer or a polymer compound having a molecular weight of 40-100,000, which includes phosphoric acid, a carboxylic acid or salts thereof.

14. The method of claim 13, wherein the salts of the phosphoric acid or the carboxylic acid have an organic side chain selected from the group consisting of sodium, ammonium, a primary, secondary, tertiary or quaternary alkyl ammonium salt, C₁-C₃₀ hydrocarbon, a homopolymer selected from the group consisting of polyolefin, polyether, polymethacrylate, polyacrylate, polyacetate, polyester and polyurethane, and a copolymer thereof.

15. The method of claim 13, wherein the lipophilic polymer has a homopolymer selected from the group consisting of polyolefin, polyether, polymethacrylate, polyacrylate, polyacetate, polyester and polyurethane or a copolymer thereof as a main chain.

16. The method of claim 9, wherein the suspension stabilizer is at least one selected from the group consisting of vinyl acetate, cellulose and gelatin.

17. The method of claim 9, wherein the suspension stabilizer comprises: a primary suspension stabilizer comprising a polyvinyl acetate having a degree of polymerization of 500-3,000, which has been hydrolyzed to 70-98 mol%, and a modified cellulose having a degree of substitution of 1.0-3.0 and a degree of polymerization of 50-2,000; and a secondary suspension stabilizer comprising a polyvinyl acetate having a degree of polymerization of 500-3,000, which has been hydrolyzed to 10-60 mol%.

18. A method for preparing a PVC based nanocomposite resin composition comprising the steps of:
(a) adding nano calcium carbonate, a lipophilic dispersing agent and a polymerisation initiator to a vinyl chloride monomer to disperse them;
(b) adding the resultant mixture system to an aqueous solution system comprising deionized water and a suspension stabilizer to prepare a suspension system and performing polymerization at an elevated temperature to prepare a PVC based nanocomposite resin composition; and
(c) processing the PVC based nanocomposite resin composition including an impact modifier to produce extruded articles.

19. The method of claim 18, wherein the impact modifier is at least one selected from the group consisting of a methyl methacrylate-butadiene-styrene copolymer, an acrylic impact modifier and a chlorinated polyethylene.

20. The method of claim 18, wherein each of the nano calcium carbonate, the lipophilic dispersing agent and the polymerization initiator of the step (a) is comprised in 1-30 parts by weight, 0.01-10 parts by weight and 0.01-5 parts by weight, respectively, per 100 parts by weight of the vinyl chloride monomer, the suspension stabilizer of the step (b) is comprised in 0.01-5 parts by weight per 100 parts by weight of the vinyl chloride monomer and the impact modifier of the step (c) is comprised in 1-10 parts by weight per 100 parts by weight of the PVC based nanocomposite resin composition.

21. The method of claim 18, wherein the nano calcium carbonate has a particle size of at most 500 nm.

22. The method of claim 18, wherein the lipophilic dispersing agent is a monomer or polymer compound having a molecular weight of 40-100,000, which includes a phosphoric acid, a carboxylic acid or a salt thereof.

23. The method of claim 22, wherein the salts of the phosphoric acid or the carboxylic acid have an organic side chain selected from the group consisting of sodium, ammonium, a primary, secondary, tertiary or quaternary alkyl ammonium salt, C₁-C₃₀ hydrocarbon, a homopolymer selected from the group consisting of polyolefin, polyether, polymethacrylate, polyacrylate, polyacetate, polyester and polyurethane, and a copolymer thereof.

24. The method of claim 22, wherein the lipophilic polymer has a homopolymer selected from the group consisting of polyolefin, polyether, polymethacrylate, polyacrylate, polyacetate, polyester and polyurethane or a copolymer thereof as a main chain.

25. The method of claim 18, wherein the suspension stabilizer is at least one selected from the group consisting of vinyl acetate, cellulose and gelatin.

26. The method of claim 18, wherein the suspension stabilizer comprises: a primary suspension stabilizer comprising a polyvinyl acetate having a degree of polymerization of 500-3,000 and a modified cellulose having a degree of substitution of 1.0-3.0 and a degree of polymerization of 50-2,000, which has been hydrolyzed to 70-98 mol%; a secondary suspension stabilizer comprising a polyvinyl acetate having a degree of polymerization of 500-3,000, which has been hydrolyzed to 10-60 mol%.

## Patentansprüche

1. Nano-Calciumcarbonat/Vinylchlorid-Monomer-Dispersion, die ein Vinylchlorid-Monomer, Nano-Calciumcarbonat und ein lipophiles Dispergiermittel umfasst.

2. Nano-Calciumcarbonat/Vinylchlorid-Monomer-Dispersion nach Anspruch 1, die weiter einen Polymerisationsinitiator umfasst.

3. Nano-Calciumcarbonat/Vinylchlorid-Monomer-Dispersion nach Anspruch 1, die 1-30 Gewichtsteile Nano-Calciumcarbonat und 0,01-10 Gewichtsteile eines lipophilen Dispergiermittels pro 100 Gewichtsteile des Vinylchlorid-Monomers umfasst.

4. Nano-Calciumcarbonat/Vinylchlorid-Monomer-Dispersion nach Anspruch 2, die 1-30 Gewichtsteile Nano-Calciumcarbonat, 0,01-10 Gewichtsteile eines lipophilen Dispergiermittels und 0,01-5 Gewichtsteile eines Polymerisationsinitiators pro 100 Gewichtsteile des Vinylchlorid-Monomers umfasst.

5. Nano-Calciumcarbonat/Vinylchlorid-Monomer-Dispersion nach Anspruch 1 oder 2, wobei das lipophile Dispergiermittel eine Monomer- oder Polymerverbindung mit einem Molekulargewicht von 40-100.000 ist, die eine Phosphorsäure, eine Carbonsäure oder ein Salz davon einschließt.

6. Nano-Calciumcarbonat/Vinylchlorid-Monomer-Dispersion nach Anspruch 5, wobei die Salze der Phosphorsäure oder der Carbonsäure eine organische Seitenkette ausweisen, die ausgewählt ist aus der Gruppe, bestehend aus Natrium-, Ammonium-, primärem, sekundärem, tertiärem oder quartärem Alkylammoniumsalz, C₁-C₃₀-Kohlenwasserstoffen, einem Homopolymer, ausgewählt aus der Gruppe, bestehend aus Polyolefin, Polyether, Polymethacrylat, Polyacetat, Polyacrylat, Polyester und Polyurethan, und einem Copolymer davon.

7. Nano-Calciumcarbonat/Vinylchlorid-Monomer-Dispersion nach Anspruch 5, wobei das lipophile Polymer ein Homopolymer, das ausgewählt ist aus der Gruppe, bestehend aus Polyolefin, Polyether, Polymethacrylat, Polyacrylat, Polyacetat, Polyester und Polyurethan, oder ein Copolymer davon als eine Hauptkette aufweist.

8. PVC-basierte Nanokomposit-Harzzusammensetzung, hergestellt unter Verwendung der Nano-Calciumcarbonat/Vinylchlorid-Monomer-Dispersion nach einem der Ansprüche 1-7.

9. Verfahren zur Herstellung einer PVC-basierten Nanokomposit-Harzzusammensetzung, das die Schritte umfasst:
(a) Zugeben von Nano-Calciumcarbonat und einem lipophilen Dispergiermittel zu einem Vinylchlorid-Monomer, um sie zu dispergieren;
(b) Zugeben des resultierenden Mischungssystems zu einem wässrigen Lösungssystem, das entionisiertes Wasser, einen Suspensionsstabilisator und einen Polymerisationsinitiator umfasst, um ein Suspensionssystem herzustellen, und Polymerisieren des Suspensionssystems bei einer erhöhten Temperatur, um eine PVC-basierte Nanokomposit-Harzzusammensetzung herzustellen; und
(c) Verarbeiten der PVC-basierten Nanokomposit-Harzzusammensetzung, einschließlich eines Schlagmodifikators, um extrudierte Gegenstände herzustellen.

10. Verfahren nach Anspruch 9, wobei der Schlagmodifikator wenigstens einer ist, der ausgewählt ist aus der Gruppe, bestehend aus einem Methylmethacrylat-Butadien-Styrol-Copolymer, einem Acryl-Schlagmodifikator und chloriertem Polyethylen.

11. Verfahren nach Anspruch 9, wobei das Nano-Calciumcarbonat und das lipophile Dispergiermittel im Schritt (a) jeweils in 1-30 Gewichtsteilen bzw. 0,01-10 Gewichtsteilen pro 100 Gewichtsteile des Vinylchlorid-Monomers enthalten ist und der Suspensionsstabilisator und der Polymerisationsinitiator des Schrittes (b) jeweils in 0,01-5 Gewichtsteilen bzw. 0,01-5 Gewichtsteilen pro 100 Gewichtsteile des Vinylchlorid-Monomers enthalten ist und der Schlagmodifikator des Schrittes (c) in 1-10 Gewichtsteilen pro 100 Gewichtsteile der PVC-basierten Nanokomposit-Harzzusammensetzung enthalten ist.

12. Verfahren nach Anspruch 9, wobei das Nano-Calciumcarbonat eine Teilchengröße von höchstens 500 aufweist.

13. Verfahren nach Anspruch 9, wobei das lipophile Dispergiermittel eine Monomer- oder eine Polymerverbindung mit einem Molekulargewicht von 40-100.000 ist, die Phosphorsäure, eine Carbonsäure oder Salze davon einschließt.

14. Verfahren nach Anspruch 13, wobei die Salze der Phosphorsäure oder der Carbonsäure eine organische Seitenkette aufweisen, die ausgewählt ist aus der Gruppe, bestehend aus Natrium-, Ammonium-, einem primären, sekundären, tertiären oder quartären Alkylammoniumsalz, C₁-C₃₀-Kohlenwasserstoff, ein Homopolymer, ausgewählt aus der Gruppe, bestehend aus Polyolefin, Polyether, Polymethacrylat, Polyacrylat, Polyacetat, Polyester und Polyurethan, und einem Copolymer davon.

15. Verfahren nach Anspruch 13, wobei das lipophile Polymer ein Homopolymer, das ausgewählt ist aus der Gruppe, bestehend aus Polyolefin, Polyether, Polymethacrylat, Polyacrylat, Polyacetat, Polyester und Polyurethan, oder ein Copolymer davon als eine Hauptkette aufweist.

16. Verfahren nach Anspruch 9, wobei der Suspensionsstabilisator wenigstens einer ist, der ausgewählt ist aus der Gruppe, bestehend aus Vinylacetat, Cellulose und Gelatine.

17. Verfahren nach Anspruch 9, wobei der Suspensionsstabilisator: einen primären Suspensionsstabilisator, der ein Polyvinylacetat mit ein Polymerisationsgrad von 500-3.000, der zu 70-98 Mol-% hydrolysiert worden ist, und eine modifizierte Cellulose mit einem Substitutionsgrad von 1,0-3,0 und eine Polymerisationsgrad von 50-2.000 umfasst; und einen sekundären Suspensionsstabilisator, der ein Polyvinylacetat mit einem Polymerisationsgrad von 500-3.000 umfasst, der zu 10-60 Mol-% hydrolysiert worden ist, umfasst, umfasst.

18. Verfahren zur Herstellung einer PVC-basierten Nanokomposit-Harzzusammensetzung, das die Schritte umfasst:
(a) Zugeben von Nano-Calciumcarbonat, einem lipophilen Dispergiermittel und einem Polymerisationsinitiatior zu ein Vinylchlorid-Monomer, um sie zu dispergieren;
(b) Zugeben des resultierenden Mischungssystems zu einem wässrigen Lösungssystem, das entionisiertes Wasser und einen Suspensionsstabilisator umfasst, um ein Suspensionssystem herzustellen, und Durchführen einer Polymerisation bei einer erhöhten Temperatur, um eine PVC-basierte Nanokomposit-Harzzusammensetzung herzustellen; und
(c) Verarbeiten der PVC-basierten Nanokomposit-Harzzusammensetzung, einschließlich eines Schlagmodifikators, um extrudierte Gegenstände herzustellen.

19. Verfahren nach Anspruch 18, wobei der Schlagmodifikator wenigstens einer ist, der ausgewählt ist aus der Gruppe, bestehend aus einem Methylmethacrylat-Butadien-Styrol-Copolymer, einem Acryl-Schlagmodifikator und einem chlorierten Polyethylen.

20. Verfahren nach Anspruch 18, wobei das Nano-Calciumcarbonat, das lipophile Dispergiermittel und der Polymerisationsinitiator des Schrittes (a) jeweils in 1-30 Gewichtsteilen, 0,01-10 Gewichtsteilen bzw. 0,01-5 Gewichtsteilen pro 100 Gewichtsteile des Vinylchlorid-Monomers enthalten ist, der Suspensionsstabilisator des Schrittes (b) in 0,01-5 Gewichtsteilen pro 100 Gewichtsteile des Vinylchlorid-Monomers enthalten ist und der Schlagmodifikator des Schrittes (c) in 1-10 Gewichtsteilen pro 100 Gewichtsteile der PVC-basierten Nanokomposit-Harzzusammensetzung enthalten ist.

21. Verfahren nach Anspruch 18, wobei das Nano-Calciumcarbonat eine Teilchengröße von höchstens 500 nm aufweist.

22. Verfahren nach Anspruch 18, wobei das lipophile Dispergiermittel eine Monomer - oder Polymerverbindung mit einem Molekulargewicht von 40-100.000 ist, die eine Phosphorsäure, eine Carbonsäure oder ein Salz davon einschließt.

23. Verfahren nach Anspruch 22, wobei die Salze der Phosphorsäure oder der Carbonsäure eine organische Seitenkette ausweisen, die ausgewählt ist aus der Gruppe, bestehend aus Natrium-, Ammonium-, einem primären, sekundären, tertiären oder quartären Alkylammoniumsalz, C₁-C₃₀-Kohlenwasserstoff, einem Homopolymer, ausgewählt aus der Gruppe, bestehend aus Polyolefin, Polyether, Polymethacrylat, Polyacrylat, Polyacetat, Polyester und Polyurethan, und einem Copolymer davon.

24. Verfahren nach Anspruch 22, wobei das lipophile Polymer ein Homopolymer, das ausgewählt ist aus der Gruppe, bestehend aus Polyolefin, Polyether, Polymethacrylat, Polyacrylat, Polyacetat, Polyester und Polyurethan, oder ein Copolymer davon als eine Hauptkette aufweist.

25. Verfahren nach Anspruch 18, wobei der Suspensionsstabilisator wenigstens einer ist, der ausgewählt ist aus der Gruppe, bestehend aus Vinylacetat, Cellulose und Gelatine.

26. Verfahren nach Anspruch 18, wobei der Suspensionsstabilisator: einen primären Suspensionsstabilisator, der ein Polyvinylacetat mit einem Polymerisationsgrad von 500-3.000 und eine modifizierte Cellulose mit einem Substitutionsgrad von 1,0-3,0 und einem Polymerisationsgrad von 50-2.000, die zu 70-98 Mol-% hydrolysiert worden ist, umfasst; einen sekundären Suspensionsstabilisator, der ein Polyvinylacetat mit einem Polymerisationsgrad von 500-3.000 umfasst, das zu 10-60 Mol-% hydrolysiert worden ist, umfasst, umfasst.

## Revendications

1. Une dispersion de chlorure de vinyle monomère/carbonate de calcium manométrique comprenant un chlorure de vinyle monomère, un carbonate de calcium nanométrique et un agent de dispersion lipophile.

2. La dispersion de chlorure de vinyle monomère/carbonate de calcium nanométrique selon la revendication 1, qui comprend en plus un initiateur de polymérisation.

3. La dispersion de chlorure de vinyle monomère/carbonate de calcium manométrique selon la revendication 1, qui comprend 1 à 30 parties en poids de carbonate de calcium nanométrique et 0,01 à 10 parties en poids d'un agent de dispersion lipophile pour 100 parties en poids du chlorure de vinyle monomère.

4. La dispersion de chlorure de vinyle monomère/carbonate de calcium nanométrique selon la revendication 2, qui comprend 1 à 30 parties en poids de carbonate de calcium nanométrique, 0,01 à 10 parties en poids d'un agent de dispersion lipophile et 0,01 à 5 parties en poids d'un initiateur de polymérisation pour 100 parties en poids du chlorure de vinyle monomère.

5. La dispersion de chlorure de vinyle monomère/carbonate de calcium nanométrique selon la revendication 1 ou 2, où l'agent de dispersion lipophile est un composé monomère ou polymère ayant un poids moléculaire de 40 à 100.000, qui inclut un acide phosphorique, un acide carboxylique ou un de leurs sels.

6. La dispersion de chlorure de vinyle monomère/carbonate de calcium nanométrique selon la revendication 5, où les sels de l'acide phosphorique ou de l'acide carboxylique ont une chaîne organique latérale sélectionnée dans le groupe constitué par un sodium, un ammonium, un sel d'ammonium alkyl primaire, secondaire, tertiaire ou quaternaire, des hydrocarbures C₁ à C₃₀, un homopolymère sélectionné dans le groupe constitué par polyoléfine, polyéther, polyméthacrylate, polyacétate, polyacrylate, polyester et polyuréthane, et un de leurs copolymères.

7. La dispersion de chlorure de vinyle monomère/carbonate de calcium manométrique selon la revendication 5, où le polymère lipophile a un homopolymère sélectionné dans le groupe constitué par polyoléfine, polyéther, polyméthacrylate, polyacrylate, polyacétate, polyester et polyuréthane ou un de leurs copolymères en chaîne principale.

8. Une composition de résine de nanocomposites à base de PVC préparé en utilisant la dispersion de chlorure de vinyle monomère/carbonate de calcium nanométrique selon l'une quelconque des revendications 1 à 7.

9. Un procédé de préparation d'une composition de résine de nanocomposites à base de PVC comprenant les étapes consistant à :
(a) ajouter du carbonate de calcium nanométrique et un agent de dispersion lipophile à un chlorure de vinyle monomère pour les disperser ;
(b) ajouter le mélange obtenu à une solution aqueuse comprenant de l'eau désionisée, un stabilisant de suspension et un initiateur de polymérisation pour préparer une suspension et polymériser la suspension à une température élevée pour préparer une composition de résine de nanocomposites à base de PVC ; et
(c) traiter la composition de résine de nanocomposites à base de PVC en incluant un modificateur de résistance aux chocs pour produire des articles extrudés.

10. Le procédé selon la revendication 9, où le modificateur de résistance aux chocs est au moins un composé sélectionné dans le groupe constitué par un copolymère de méthacrylate-butadiène-styrène de méthyle, un modificateur acrylique de résistance aux chocs et un polyéthylène chloré.

11. Le procédé selon la revendication 9, où chacun du carbonate de calcium nanométrique et de l'agent de dispersion lipophile de l'étape (a) comprend de 1 à 30 parties en poids et de 0,01 à 10 parties en poids, respectivement, pour 100 parties en poids du chlorure de vinyle monomère et chacun du stabilisant de suspension et de l'initiateur de polymérisation de l'étape (b) comprend de 0,01 à 5 parties en poids et de 0,01 à 5 parties en poids, respectivement, pour 100 parties en poids du chlorure de vinyle monomère et le modificateur de résistance aux chocs de l'étape (c) comprend de 1 à 10 parties en poids pour 100 parties en poids de la composition de résine de nanocomposites à base de PVC.

12. Le procédé selon la revendication 9, où le carbonate de calcium nanométrique a des particules d'une taille de 500 nm au plus.

13. Le procédé selon la revendication 9, où l'agent de dispersion lipophile est un composé monomère ou polymère ayant un poids moléculaire de 40 à 100.000, qui inclut un acide phosphorique, un acide carboxylique ou leurs sels.

14. Le procédé selon la revendication 13, où les sels de l'acide phosphorique ou de l'acide carboxylique ont une chaîne organique latérale sélectionnée dans le groupe constitué par un sodium, un ammonium, un sel d'ammonium alkyl primaire, secondaire, tertiaire ou quaternaire, un hydrocarbure C₁ à C₃₀, un homopolymère sélectionné dans le groupe constitué par polyoléfine, polyéther, polyméthacrylate, polyacrylate, polyacétate, polyester et polyuréthane, et un de leurs copolymères.

15. Le procédé selon la revendication 13, où le polymère lipophile a un homopolymère sélectionné dans le groupe constitué par polyoléfine, polyéther, polyméthacrylate, polyacrylate, polyacétate, polyester et polyuréthane ou un de leurs copolymères en chaîne principale.

16. Le procédé selon la revendication 9, où le stabilisant de suspension est au moins un composé sélectionné dans le groupe constitué par un acétate de vinyle, une cellulose et une gélatine.

17. Le procédé selon la revendication 9, où le stabilisant de suspension comprend : un stabilisant de suspension primaire comprenant un acétate de polyvinyle ayant un degré de polymérisation de 500 à 3.000, qui a été hydrolysé entre 70 et 98 % en moles et une cellulose modifiée ayant un degré de substitution de 1,0 à 3,0 et un degré de polymérisation de 50 à 2.000 ; et un stabilisant de suspension secondaire comprenant un acétate de polyvinyle ayant un degré de polymérisation de 500 à 3.000, qui a été hydrolysé entre 10 et 60 % en moles.

18. A procédé de préparation d'une composition de résine de nanocomposites à base de PVC comprenant les étapes consistant à :
(a) ajouter du carbonate de calcium nanométrique, un agent de dispersion lipophile et un initiateur de polymérisation à un chlorure de vinyle monomère pour les disperser ;
(b) ajouter le mélange obtenu à une solution aqueuse comprenant de l'eau désionisée et un stabilisant de suspension pour préparer une suspension et réaliser la polymérisation à une température élevée pour préparer une composition de résine de nanocomposites à base de PVC; et
(c) traiter la composition de résine de nanocomposites à base de PVC en incluant un modificateur de résistance aux chocs pour produire des articles extrudés.

19. Le procédé selon la revendication 18, où le modificateur de résistance aux chocs est au moins un composé sélectionné dans le groupe constitué par un copolymère de méthacrylate-butadiène-styrène de méthyle, un modificateur acrylique de résistance aux chocs et un polyéthylène chloré.

20. Le procédé selon la revendication 18, où chacun du carbonate de calcium nanométrique, de l'agent de dispersion lipophile et de l'initiateur de polymérisation de l'étape (a) comprend de 1 à 30 parties en poids, de 0,01 à 10 parties en poids et de 0,01 à 5 parties en poids, respectivement, pour 100 parties en poids du chlorure de vinyle monomère, le stabilisant de suspension de l'étape (b) comprend entre 0,01 à 5 parties en poids pour 100 parties en poids du chlorure de vinyle monomère et le modificateur de résistance aux chocs de l'étape (c) comprend de 1 à 10 parties en poids pour 100 parties en poids de la composition de résine de nanocomposites à base de PVC.

21. Le procédé selon la revendication 18, où le carbonate de calcium manométrique a des particules d'une taille de 500 nm au plus.

22. Le procédé selon la revendication 18, où l'agent de dispersion lipophile est un composé monomère ou polymère ayant un poids moléculaire de 40 à 100.000, qui inclut un acide phosphorique, un acide carboxylique ou un de leurs sels.

23. Le procédé selon la revendication 22, où les sels de l'acide phosphorique ou de l'acide carboxylique ont une chaîne organique latérale sélectionnée dans le groupe constitué un sodium, un ammonium, un sel d'ammonium alkyl primaire, secondaire, tertiaire ou quaternaire, un hydrocarbure C₁ à C₃₀, un homopolymère sélectionné dans le groupe constitué par polyoléfine, polyéther, polyméthacrylate, polyacrylate, polyacétate, polyester et polyuréthane, et un de leurs copolymères.

24. Le procédé selon la revendication 22, où le polymère lipophile a un homopolymère sélectionné dans le groupe constitué par polyoléfine, polyéther, polyméthacrylate, polyacrylate, polyacétate, polyester et polyuréthane ou un de leurs copolymères en chaîne principale.

25. Le procédé selon la revendication 18, où le stabilisant de suspension est au moins un composé sélectionné dans le groupe constitué par un acétate de vinyle, une cellulose et une gélatine.

26. Le procédé selon la revendication 18, où le stabilisant de suspension comprend : un stabilisant de suspension primaire comprenant un acétate de polyvinyle ayant un degré de polymérisation de 500 à 3.000 et une cellulose modifiée ayant un degré de substitution de 1,0 à 3,0 et un degré de polymérisation de 50 à 2.000, qui a été hydrolysé entre 70 et 98 % en moles ; un stabilisant de suspension secondaire comprenant un acétate de polyvinyle ayant un degré de polymérisation de 500 à 3,000, qui a été hydrolysé entre 10 et 60 % en moles.
